# EUROPEAN PATENT SPECIFICATION

(11) **EP 3 638 833 B1**
(45) Date of publication and mention of the grant of the patent: **07.08.2024**
(21) Application number: 18738142.1
(22) Date of filing: 15.06.2018
(51) Int. Cl.: D03D 15/47

(54) **WOVEN 3D FIBER REINFORCED STRUCTURE AND METHOD OF MAKING THEREOF**
DURCH GEWEBTE 3D-FASER VERSTÄRKTE STRUKTUR UND VERFAHREN ZUR HERSTELLUNG DAVON
STRUCTURE 3D TISSÉE RENFORCÉE DE FIBRES, ET SON PROCÉDÉ DE FABRICATION

(30) Priority: 16.06.2017 US 201762520840 P; 15.08.2017 US 201762545656 P
(43) Date of publication of application: 22.04.2020
(73) Proprietor: Albany Engineered Composites, Inc., Rochester, NH 03867 (US)
(72) Inventor: BAYRAKTAR, Harun, Newfields, NH 03856 (US)
(74) Representative: Zacco Sweden AB
(86) International application number: PCT/US2018/037929
(87) International publication number: WO 2018/232363

(56) References cited:
- EP-A1- 3 095 901
- US-A1- 2012 144 984
- US-A1- 2013 216 770

## Description

### BACKGROUND

### 1. Field of the disclosure

The application relates to load bearing structures and methods of making same. In particular, the load bearing structures are made from three-dimensional (3D) woven fabrics.

### 2. Related Art

In load bearing structures (automobiles, airplanes, bridges, etc.), oftentimes the load cases and the geometric constraints create a load path that subjects the material to significant shear stresses. For example, an aircraft fuselage will experience torsional flight loads that result in shear stresses in the fuselage skin. As such, it is an important feature for the material used in such structures to have adequate shear stiffness and strength.

A common structure for improving shear stiffness and strength are laminated composites constructed from unidirectional (uniaxial) or bi-axially woven layers. These layers, which by themselves have weak shear properties, are placed at various angles to create laminates that have shear properties that are dramatically improved. Most commonly, lamina are placed at 0°, 45°, or 90° angles in different proportions to meet structural design requirements, but other angles are also possible.

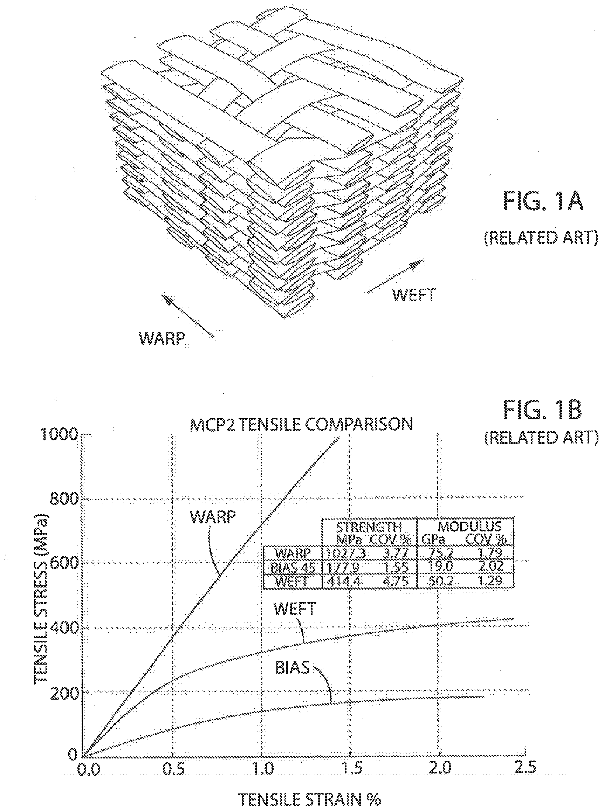

Figure 1 illustrates a 3D woven composite that is woven bi-axially. That is, tows and fibers are in warp (0°) and weft directions (90°). Bi-axially woven composites in three dimensions have multiple layers as shown in FIG. 1A. Lack of bias fibers at other angles combined with inherently weak shear properties of the tows leads to weak macroscale shear stiffness and strength that can manifest itself in pure shear loading or when loaded in 45°. The in-plane shear stiffness and strength is a weakness for certain applications. FIG. 1B shows a comparison of tensile strength (stress-strain) for a 3D woven composite with intermediate modulus carbon fiber reinforcement when loaded in the 0° (warp), 45° (bias), and 90° (weft) directions. Where COV is the coefficient of variation and IM7 is intermediate modulus carbon fiber reinforcement. A typical value for in-plane shear modulus (G₁₂) is about 5.5 GPa.

Some researchers have attempted to solve this in-plane weakness of shear strength and stiffness of 3D bi-axially woven composites by weaving in bias tows at angles other than 0° and 90°, which can significantly increase the complexity of the weaving system and process. See, for example, Labanieh et al, "Conception and characterization of multiaxis 3d woven preform," 2013, TexComp Conference, Leuven, Belgium.

Documents EP3095901A1, US2013/216770A1 and US 2012/144984A1 disclose 3D woven structures comprising a plurality of first yarns in a particular direction and a plurality of second yarns in another direction interwoven with the plurality of first yarns, wherein at least some second yarns include at least one bias reinforcement yarn.

### SUMMARY OF THE DISCLOSURE

The disclosure is directed to a three-dimensional (3D) woven structure and method of making the structure, as defined in the independent claims. The structure includes a plurality of first yarns in a particular direction and a plurality of second yarns in another direction interwoven with the plurality of first yarns. At least some second yarns include at least one bias reinforcement yarn.

At least some second yarns are a laminated structure having at least three layers that include at least one second yarn bias layer, each of the at least one second yarn bias layers having fibers at an angle of other than 0° or 90° with respect to fibers in second yarn layers that are not second yarn bias layers.

The laminated structure includes a second yarn first layer of fibers in a first direction and a second yarn second layer of fibers in a second direction. The at least one second yarn bias layer of fibers is disposed between the second yarn first and second layers and fibers in a second yarn first bias layer are at a first angle with respect to the first direction.

The laminated structure can also comprise a second yarn second bias layer of fibers disposed between the second yarn first and second layers with n fibers in the second yarn second bias layer at a second angle with respect to the first direction.

The structure can also include at least some first yarns that are a laminated structure having at least three layers that include at least one first yarn bias layer, each of the at least one first yarn bias layers having fibers at an angle of other than 0° or 90° with respect to fibers in first yarn layers that are not first yarn bias layers. The laminated structure can also include a first yarn first layer of fibers in a third direction and a first yarn second layer of fibers in a fourth direction. The at least one first yarn bias layer of fibers is disposed between the first yarn first and second layers and fibers in a first yarn first bias layer are at another first angle with respect to the first direction.

In another embodiment at least some of the second yarns are braided tows and can include at least some of the first yarns being braided tows.

In yet another embodiment at least some of the second yarns are multiaxial tapes and can include at least some of the first yarns being multiaxial tapes.

### BRIEF DESCRIPTION OF THE DRAWINGS

The accompanying drawings, which are included to provide a further understanding of the invention, are incorporated in and constitute a part of this specification. The drawings presented herein illustrate different embodiments of the invention and together with the description serve to explain the principles of the invention. In the drawings:
Figure 1A illustrates a ply-to-ply 3D weave of related art.
Figure 1B illustrates a typical tensile stress-strain relationship in a biaxially 3D woven composite with no bias fiber reinforcement.
Figure 2 illustrates a structure of a multi-directional, multi-layer tow.
Figure 3 is a graphical comparison of the elastic constants of three sample structures.
Figure 4 is a photograph of a 3D woven preform constructed with braided yarns containing off-axis fiber reinforcement.
Figures 5 and 6 are photographs of the composite formed from the preform of Figure 4.

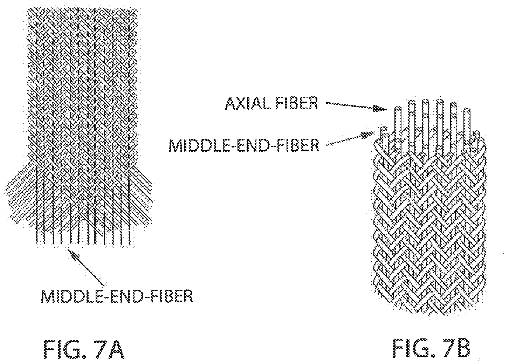

Figures 7A-7B illustrate examples of yarns that contain off-axis orientation of fibers.
Figure 8 illustrates a summary of tensile modulus and strength results for a sample comprising a multiaxial tow.
Figure 9 illustrates the in-plane tensile stress-strain performance for a 3D woven composite comprised of multiaxial fiber reinforcement.
Figure 10 illustrates a comparison between the in-plane 45° tensile responses for 3D woven composites comprised of multiaxial reinforcement and uniaxial reinforcement.

### DETAILED DESCRIPTION

Terms "comprising" and "comprises" in this disclosure can mean "including" and "includes" or can have the meaning commonly given to the term "comprising" or "comprises" in U.S. Patent Law. Terms "consisting essentially of" or "consists essentially of" if used in the claims have the meaning ascribed to them in U.S. Patent Law. Other aspects of the invention are described in or are obvious from (and within the ambit of the invention) the following disclosure.

The terms "threads", "fibers", and "yarns" are used interchangeably in the following description. "Threads", "fibers", and "yarns" as used herein can refer to monofilaments, multifilament yarns, twisted yarns, textured yarns, coated yarns, bicomponent yarns, as well as yarns made from stretch broken fibers of any materials known to those of ordinary skill in the art. "Tows" are comprised of multiple fibers and are referred to herein interchangeably as, and include the structures of, tows, multifilament tows, multifiber tows, and braided tows. Fibers can be made of carbon, nylon, rayon, fiberglass, cotton, ceramic, aramid, polyester, metal, polyethylene glass, and/or other materials that exhibit desired physical, thermal, chemical or other properties.

The term "folded" is broadly used herein to mean "forming", which includes unfolding, bending, and other such terms for manipulating the shape of the woven fabric. The term "bias" is used interchangeably with "off-axis" and means at an angle other than 0° and 90°, with respect to a stated reference.

For a better understanding of the invention, its advantages and objects attained by its uses, reference is made to the accompanying descriptive matter in which non-limiting embodiments of the invention are illustrated in the accompanying drawings and in which corresponding components are identified by the same reference numerals.

This invention disclosure describes a product and method of making the product to improve in-plane shear properties for woven structures by using tows that have improved shear properties that can be woven using existing 3D weaving equipment and processes. While, as discussed above, bi-axially woven fabrics can employ laminated bias layers to improve in-plane shear properties, the present disclosure provides improvement in in-plane shear properties by weaving tows that are themselves constructed to have off-axis (bias) reinforcement. That is, the tows contain fiber reinforcement in various directions with respect to the tow axial direction. The tows are multilayered, such as laminated tapes, multiaxial tapes. The tows disclosed herein may be used for some or all of the tows in any or all directions of the fabric. For example, the tows can be used for some or all the tows in either or both the warp and weft directions of the woven fabric. In another example, the tows can be used in some or all of the tows in either the warp or weft direction while uniaxial tows are used in the remaining weft or warp direction. It is contemplated the tows could also be used in a bias layer of a laminated fabric.

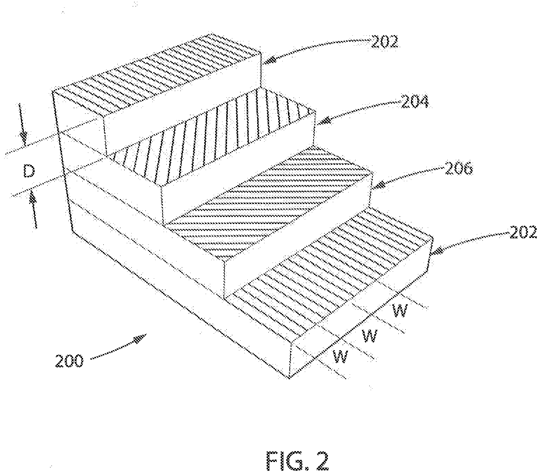

Figure 2 illustrates a sectional view of an embodiment of a multiaxial, multilayer tow 200 having four layers. Fibers in outside layers 202 are oriented in a particular direction, which for purposes of reference will be referred to as 0°. Fibers in a first intermediate layer 204 are oriented at +45° and fibers in a second intermediate layer 206 are oriented at -45°, with respect to the fibers in outside layer 202. While the tows are shown with fibers at +/-45° in the intermediate layers, other angles including +/-30° or +/-60° might be preferred due to other considerations. Also, the angles shown and discussed for the bias uniaxial layers are for illustration only and can be angled with respect to one another as design necessities require. It should be noted that more or fewer layers can be used depending on design necessities.

Each of the layers 202, 204, 206 can have multiple layers of fibers in the same orientation to have a desired thickness D. It should be noted that the thickness of each layer may be the same or different from other layers as necessitated by design requirements. An exemplary thickness of each layer is in the range of 0.01" (0.025 cm) to 0.075" (0.190 cm) with 0.0625" (0.159 cm) being a nominal thickness.

The tow 200 may be fabricated in a desired tape width W or as a sheet and slit into tapes of the desired width W. Multilayer and multi-directional non-crimp fabrics (NCF) can be treated with thermoplastic veils on either or both of the outside surfaces of the first and last layers 202 then slit to tape width W for Automated Tape Layup (ATL) or in this instance 3D weaving applications.

An exemplary tape width W of the tow is in the range of 0.02" (0.051 cm) to 0.75" (1.905 cm) with 0.25" (0.635 cm) being a nominal width. Regardless, the multi-directional, multi-layer tows constructed as described herein are used to fabricate a 3D bi-axially woven preform of desired configuration.

3D bi-axially woven preforms can be woven with multiple bifurcations within the preform to result in a preform with various cross-sectional shapes including Pi, T, H, O, I and other shapes known to those of ordinary skill in addition to a 3D woven sheet with multiple layers. A 3D bi-axially woven preform can subsequently be impregnated with resin to form a composite structure.

The tows can be used in any known weaving technique including but not limited to Jacquard or dobby weaving with shuttle and rapier looms. Figure 2 illustrates a tow that is a laminate structure. However, additional binder fibers, not shown, may be added to the laminate structure as known to those of ordinary skill.

Such methods of manufacturing create thin non-crimp fabric (NCF) and/or resin treated material similar to Hi-Tape^{®} that can be used directly in laminated composites or in automated tape layup (ATL) manufacturing.

As illustrated, tow 200 is a laminate having a substantially rectangular cross-sectional shape, which may be referred to as a laminated tape.

As discussed above, yarns have a laminated tape structure with one or more bias layers. That is, the bias layers are layers produced from fibers that are at an angle of other than 0 degrees or 90 degrees to the layers that are not bias layers. Although in FIG. 2 the outside layers are shown with fibers in the same direction, this is not a restriction. The angular direction of fibers in a bias layer can be the same or different from the angular direction of fibers in other bias layers. Moreover, fibers in bias layers may be at 0 degrees or 90 degrees with respect to one another.

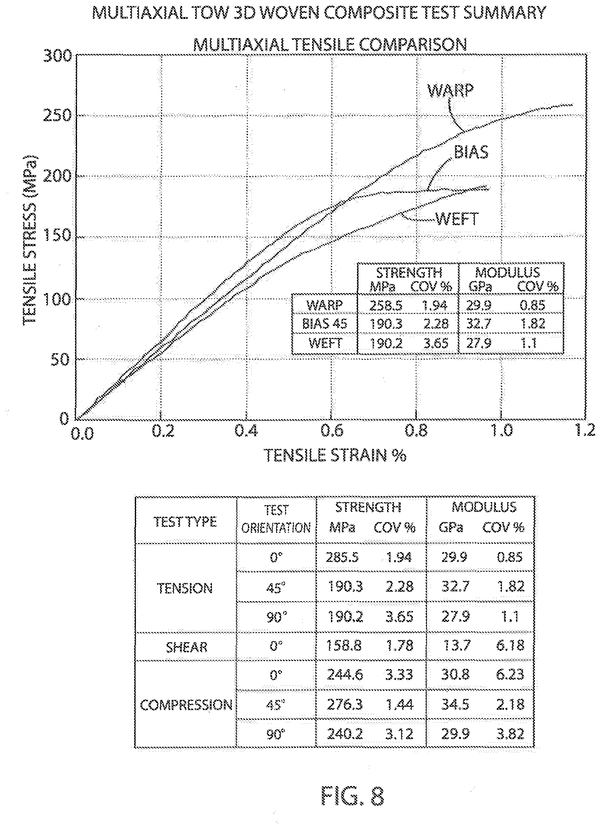

FIG. 8 shows a summary of experimental test results of tensile modulus and strength for a sample comprising a 3D fiber reinforced multiaxial tow when loaded in the 0° (warp), 45° (bias), and 90° (weft) directions.

The test was performed with the following conditions:
Tow type: Toray^{®} T300 carbon fiber
Tow size(s): 1K - number of filaments per tow
Number of tows: 24 - number of tows used to weave the braided reinforcement.
Number of straight vs. angled 8 vs 16 tows: 8 tows are used in the axial direction.
   The remaining 16 tows are interlaced via a braiding process.
Intended braid angle: 45° (actual ~55°)
Final panel FV (fiber volume): -55%

It is contemplated that flattened braided tows may simulate multiaxial tows. Homogenized tow properties are based on the lamina 58% fiber volume, which makes total composite fiber volume 46%. G₁₂ of the composite improves using braided tows (-17 GPa versus expected 4-5GPa).

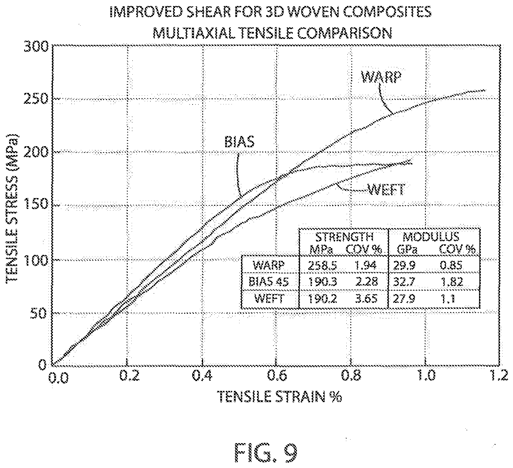

FIG. 9 shows experimental results for in-plane tensile stress-strain performance for a 3D woven composite comprised of multiaxial braided tow reinforcement. Note the modulus (slope of the lines) of the bias, weft, and warp directions are very similar. This is a result of the incorporation of off-axis fiber reinforcement within the braided tows used during the 3D weaving process.

As can be seen, the modulus of FIG. 9 is similar with that of the multiaxial reinforcement of FIG. 8, whereas the image shown in related art FIG. 1B has very different responses from the composite when loaded in warp, weft, and bias (45°) directions.

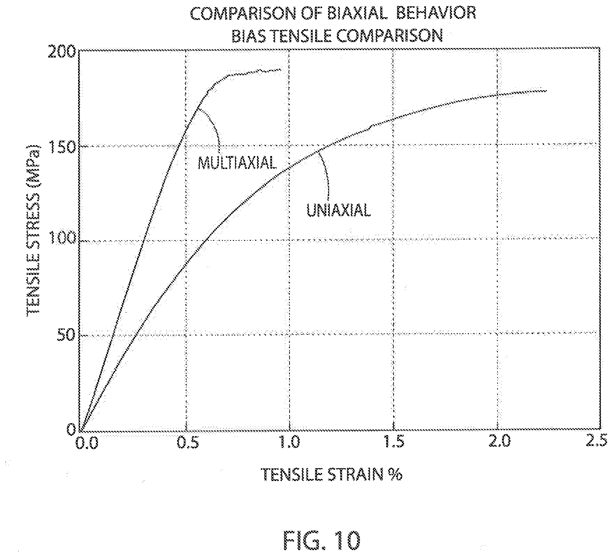

Figure 10 shows a comparison between the in-plane 45° tensile responses for 3D woven composites comprised of multiaxial reinforcement and uniaxial reinforcement. The modulus associated with multiaxial reinforcement is substantially greater than that of uniaxial reinforcement.

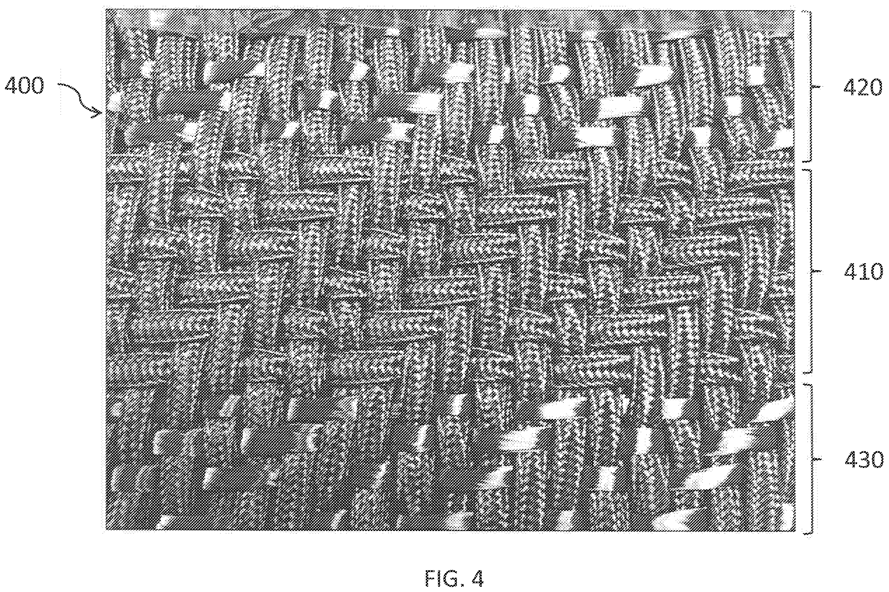

Figure 4 is a photograph of a 3D woven preform 400 having braided yarns with an off-axis fiber rather than a flat tape. The off-axis fiber in the braided yarns woven in both the warp and weft directions is the middle section 410 across the width. The top and bottom thirds 420 and 430 are woven with multi-directional braided yarns in the warp direction and standard uniaxial tows in the weft direction. This illustrates that hybrid preforms can be woven mixing standard and multiaxial tows to meet performance requirements. The braided yarn is a multi-directional tow rather than just off-axis fiber. It provides on- and off-axis reinforcement. The braided tow may have on-axis fibers in addition to off-axis fibers.

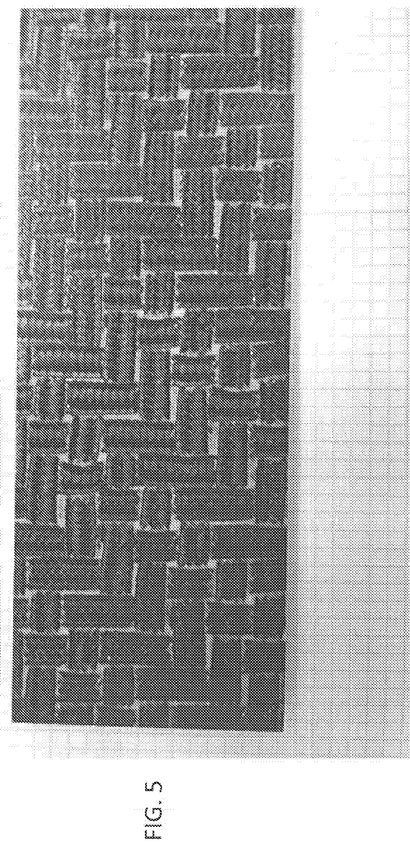

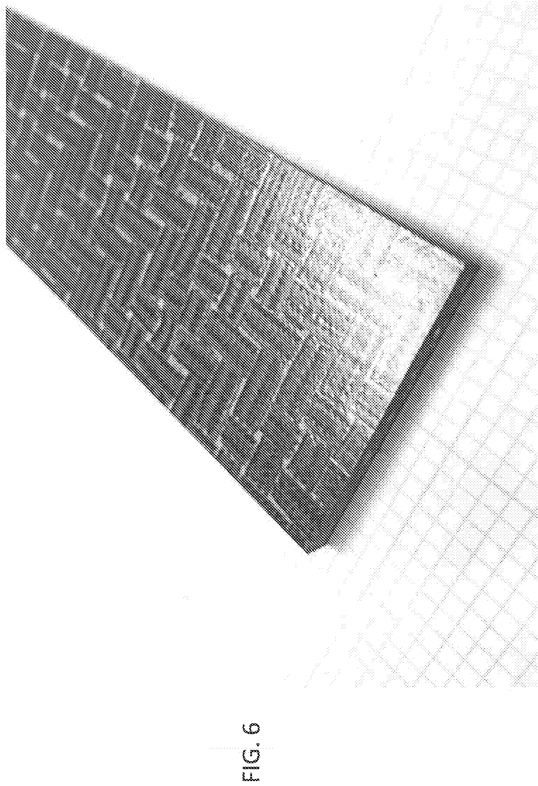

Figures 5 and 6 are photographs of the composite of the 3D woven fabric of Figure 4.

Three configurations of 3D woven composite structure using multi-directional, multi-layer tows of the present invention were compared using micromechanics homogenization capabilities embedded in Albany Engineered Composites' (AEC) 3D Composite Studio^{™} software:

### Example 1:

A 3D woven composite manufactured with uniaxial tape with fiber content and dimensions similar to Hexcel Hi-Tape^{®}. The tow packing factor is 60% resulting in an overall fiber volume of 50%. The fiber content in 0°, ±45°, and 90° directions in the composite are 50%, 0%, and 50%, respectively. A low-angle interlock fiber architecture was chosen to calculate composite elastic properties.

### Example 2:

A 3D woven composite manufactured with multidirectional tape with fiber content and dimensions similar to Hexcel Hi-Tape^{®} although their construction is more similar to C-Ply^{™} material. The tow packing factor is 60% resulting in an overall fiber volume of 50%. The fiber content in 0°, ±45° and 90° directions in the composite are 25%, 50%, and 25%, respectively. Each tow has a 50%, 50%, 0% fiber distribution. The same low-angle interlock fiber architecture from example 1 was chosen to calculate composite elastic properties and quantify the changes in mechanical properties.

### Example 3:

Standard quasi-isotropic laminate construction with 50% fiber volume and (25%, 50%, 25%) fiber distribution. This was chosen as a baseline to illustrate the weaker shear properties of standard 3D woven composites (Example 1) and quantify improvements from this invention (Example 2).

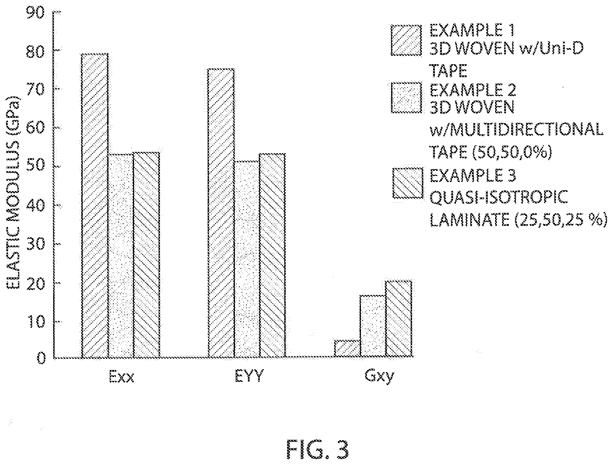

The results comparing the three examples are summarized in Table 1 and Figure 3. Example 2 shows a 3.83X improvement in shear stiffness (Gxy) over Example 1 and is within 20% of the shear stiffness of the quasi-isotropic laminate. While axial moduli (Exx and Eyy) were significantly reduced by about 33% in Example 2 compared to Example 1, they are within 4% of Example 3.

**Table 1 - Comparison of composite properties and elastic constants of the examples. Percent fiber in 0°, ±45°, and 90° is shown for each configuration. Values for Exx, Eyy, and Gxy are in GPa**

| | *Example 1* | *Example 2* | *Example 3* |
|---|---|---|---|
| | 3D Woven with Uniaxial Tape (50%, 0%, 50%) | 3D Woven with Multidirectional Tape (25%, 50%, 25%) | 2D Quasi-Isotropic Laminate (25%, 50%, 25%) |
| Exx | 78.8 | 52.9 | 53.1 |
| Eyy | 75.1 | 51.2 | 53.1 |
| Gxy | 4.2 | 16.1 | 20.1 |
| Nuxy | 0.037 | 0.209 | 0.322 |
| FV | 50% | 50% | 50% |

From these results, it can be concluded that by using a multidirectional reinforcement as described in this disclosure, it is possible to manufacture a 3D woven composite with in-plane stiffness properties very similar to the industry standard quasi-isotropic laminate with additional benefits of improved through thickness stiffness and strength, damage tolerance, and energy absorption characteristics.

The 3D multilayer, multidirectional fabrics can be impregnated with a matrix material. The matrix material includes epoxy, bismaleimide, polyester, vinyl-ester, ceramic, carbon, and other such materials.

Other embodiments are within the scope of the following claims

## Claims

1. A three-dimensional (3D) woven structure comprising:
a plurality of first yarns in a particular direction;
a plurality of second yarns in another direction interwoven with the plurality of first yarns,
**characterized in that** at least some second yarns are a laminated structure (200) having at least three layers (202, 204, 206) that include
a second yarn first layer of fibers (202) ) having fibers in a first direction,
a second yarn second layer of fibers (202) having fibers in a first or second direction, and
at least one second yarn bias layer (204, 206), each of the at least one second yarn bias layers (204, 206) having fibers at an angle of other than 0° or 90° with respect to fibers in second yarn layers that are not second yarn bias layers, and the at least one second yarn bias layer (204, 206) being disposed between the second yarn first and second layers (202),
wherein fibers in a second yarn first bias layer (204) are at a first angle with respect to the first direction.

2. The woven structure of claim 1, comprising:
a second yarn second bias layer of fibers (206) disposed between the second yarn first and second layers (202),
wherein fibers in the second yarn second bias layer (206) are at a second angle with respect to the first direction.

3. The woven structure of claim 2, wherein the first angle is between 30 and 60 degrees and the second angle is between -30 and -60 degrees.

4. The woven structure of claim 3, wherein the first angle is 45 degrees and the second angle is -45 degrees.

5. The woven structure of claim 3, wherein the first angle is 30 degrees and the second angle is -60 degrees.

6. The woven structure of claim 1, wherein the at least some second yarns comprise a second yarn first veil on an outside surface of the second yarn first layer (202) and a second yarn second veil on an outside surface of the second yarn second layer (202).

7. The woven structure of claim 1, wherein at least some first yarns are a laminated structure (200) having at least three layers that include at least one first yarn bias layer (204, 206), each of the at least one first yarn bias layers (204, 206) having fibers at an angle of other than 0° or 90° with respect to fibers in first yarn layers that are not first yarn bias layers (204, 206).

8. The woven structure of claim 7, wherein the laminated structure (200) comprises:
a first yarn first layer of fibers (202) in a third direction;
a first yarn second layer of fibers (202) in a third or fourth direction; and
the at least one first yarn bias layer of fibers (204, 206) disposed between the first yarn first and second layers (202),
wherein fibers in a first yarn first bias layer (204) are at another first angle with respect to the first direction.

9. The woven structure of claim 8, wherein the 3D woven structure is formed into a preform having a cross-sectional shape selected from the group consisting of Pi, H, T, O, and I.

10. The woven structure of claim 1, wherein at least some of the second yarns are multiaxial tapes.

11. The woven structure of claim 10, wherein at least some of the first yarns are multiaxial tapes.

12. A method of forming a three-dimensional (3D) woven structure comprising:
weaving a plurality of first yarns in a particular direction with a plurality of second yarns in another direction interwoven with the plurality of first yarns,
**characterized in that** at least some second yarns are a laminated structure (200) having at least three layers (202, 204, 206) that include at least one second yarn bias layer (204, 206), a second yarn first layer of fibers (202) having fibres in a first direction, and a second yarn second layer of fibers (202) having fibers in a first or second direction, each of the at least one second yarn bias layers (204, 206) having fibers at an angle of other than 0° or 90° with respect to fibers in second yarn layers that are not second yarn bias layers, and the at least one second yarn bias layer (204, 206) being disposed between the second yarn first and second layers (202), wherein fibers in a second yarn first bias layer (204) are at a first angle with respect to the first direction. (202).

13. The method of claim 12, comprising:
disposing a second yarn second bias layer of fibers (206) between the second yarn first and second layers (202),
wherein fibers in the second yarn second bias layer (206) are at a second angle with respect to the first direction.

14. The method of claim 13, wherein the first angle is between 30 and 60 degrees and the second angle is between -30 and -60 degrees.

15. The method of claim 12, wherein the at least some second yarns comprise a second yarn first veil on an outside surface of the second yarn first layer (202) and a second yarn second veil on an outside surface of the second yarn second layer (202).

16. The method of claim 12, wherein at least some first yarns are a laminated structure (200) having at least three layers that include at least one first yarn bias layer (204, 206), each of the at least one first yarn bias layers (204, 206) having fibers at an angle of other than 0° or 90° with respect to fibers in first yarn layers that are not first yarn bias layers (204, 206).

17. The method of claim 16, wherein the laminated structure (200) comprises:
a first yarn first layer of fibers (202) in a third direction;
a first yarn second layer of fibers (202) in a fourth direction;
the at least one first yarn bias layer of fibers (204, 206) is disposed between the first yarn first and second layers (202); and
fibers in a first yarn first bias layer (204) are at another first angle with respect to the first direction.

18. A method of forming a three-dimensional woven composite comprising:
forming a three-dimensional woven structure according to claims 12 or 17; and
impregnating the three-dimensional woven structure with a matrix material.

## Patentansprüche

1. Dreidimensionale (3D) gewebte Struktur, umfassend:
eine Vielzahl von ersten Garnen in einer bestimmten Richtung;
eine Vielzahl von zweiten Garnen in einer anderen Richtung, die mit der Vielzahl von ersten Garnen verwoben ist,
**dadurch gekennzeichnet, dass** mindestens einige zweite Garne eine laminierte Struktur (200) sind, die mindestens drei Schichten (202, 204, 206) aufweist, die Folgendes beinhalten:
eine erste Faserschicht (202) zweiter Garne, die Fasern in einer ersten Richtung aufweist,
eine zweite Faserschicht (202) zweiter Garne, die Fasern in einer ersten oder einer zweiten Richtung aufweist, und
mindestens eine Schrägschicht (204, 206) zweiter Garne, wobei jede der mindestens einen Schrägschichten (204, 206) zweiter Garne Fasern in einem anderen Winkel als 0° oder 90° in Bezug auf Fasern in Schichten zweiter Garne, die keine Schrägschichten zweiter Garne sind, aufweist und die mindestens eine Schrägschicht (204, 206) zweiter Garne zwischen der ersten und der zweiten Schicht (202) zweiter Garne angeordnet ist,
wobei sich Fasern in einer ersten Schrägschicht (204) zweiter Garne in einem ersten Winkel in Bezug auf die erste Richtung befinden.

2. Gewebte Struktur nach Anspruch 1, umfassend:
eine zweite Faserschrägschicht (206) zweiter Garne, die zwischen der ersten und der zweiten Schicht (202) zweiter Garne angeordnet ist,
wobei sich Fasern in der zweiten Schrägschicht (206) zweiter Garne in einem zweiten Winkel in Bezug auf die erste Richtung befinden.

3. Gewebte Struktur nach Anspruch 2, wobei der erste Winkel zwischen 30 und 60 Grad beträgt und der zweite Winkel zwischen -30 und -60 Grad beträgt.

4. Gewebte Struktur nach Anspruch 3, wobei der erste Winkel 45 Grad beträgt und der zweite Winkel -45 Grad beträgt.

5. Gewebte Struktur nach Anspruch 3, wobei der erste Winkel 30 Grad beträgt und der zweite Winkel -60 Grad beträgt.

6. Gewebte Struktur nach Anspruch 1, wobei die mindestens einigen zweiten Garne einen ersten Schleier zweiter Garne auf einer Außenfläche der ersten Schicht (202) zweiter Garne und einen zweiten Schleier zweiter Garne auf einer Außenfläche der zweiten Schicht (202) zweiter Garne umfassen.

7. Gewebte Struktur nach Anspruch 1, wobei mindestens einige erste Garne eine laminierte Struktur (200) sind, die mindestens drei Schichten aufweist, die mindestens eine Schrägschicht (204, 206) erster Garne beinhalten, wobei jede der mindestens einen Schrägschichten (204, 206) erster Garne Fasern in einem anderen Winkel als 0° oder 90° in Bezug auf Fasern in Schichten erster Garne, die keine Schrägschichten (204, 206) erster Garne sind, aufweist.

8. Gewebte Struktur nach Anspruch 7, wobei die laminierte Struktur (200) Folgendes umfasst:
eine erste Faserschicht (202) erster Garne in einer dritten Richtung;
eine zweite Faserschicht (202) erster Garne in einer dritten oder vierten Richtung; und
die mindestens eine Faserschrägschicht (204, 206) erster Garne, die zwischen der ersten und der zweiten Schicht (202) erster Garne angeordnet ist,
wobei sich Fasern in einer ersten Schrägschicht (204) erster Garne in einem anderen ersten Winkel in Bezug auf die erste Richtung befinden.

9. Gewebte Struktur nach Anspruch 8, wobei die 3D gewebte Struktur zu einem Vorformling geformt ist, der eine Querschnittsform aufweist, die aus der Gruppe bestehend aus Pi, H, T, O und I ausgewählt ist.

10. Gewebte Struktur nach Anspruch 1, wobei mindestens einige der zweiten Garne multiaxiale Bänder sind.

11. Gewebte Struktur nach Anspruch 10, wobei mindestens einige der ersten Garne multiaxiale Bänder sind.

12. Verfahren zum Formen einer dreidimensionalen (3D) gewebten Struktur, umfassend:
Weben einer Vielzahl von ersten Garnen in einer bestimmten Richtung mit einer Vielzahl von zweiten Garnen in einer anderen Richtung, die mit der Vielzahl von ersten Garnen verwoben sind,
**dadurch gekennzeichnet, dass** mindestens einige zweite Garne eine laminierte Struktur (200) sind, die mindestens drei Schichten (202, 204, 206) aufweist, die Folgendes beinhalten: mindestens eine Schrägschicht (204, 206) zweiter Garne, eine erste Faserschicht (202) zweiter Garne, die Fasern in einer ersten Richtung aufweist, und eine zweite Faserschicht (202) zweiter Garne, die Fasern in einer ersten oder in einer zweiten Richtung aufweist, wobei jede der mindestens einen Schrägschichten (204, 206) zweiter Garne Fasern in einem anderen Winkel als 0° oder 90° in Bezug auf Fasern in Schichten zweiter Garne, die keine Schrägschichten zweiter Garne sind, aufweist und die mindestens eine Schrägschicht (204, 206) zweiter Garne zwischen der ersten und der zweiten Schicht (202) zweiter Garne angeordnet ist, wobei sich Fasern in einer ersten Schrägschicht (204) zweiter Garne in einem ersten Winkel in Bezug auf die erste Richtung befinden.

13. Verfahren nach Anspruch 12, Folgendes umfassend:
Anordnen einer zweiten Faserschrägschicht (206) zweiter Garne zwischen der ersten und der zweiten Schicht (202) zweiter Garne,
wobei sich Fasern in der zweiten Schrägschicht (206) zweiter Garne in einem zweiten Winkel in Bezug auf die erste Richtung befinden.

14. Verfahren nach Anspruch 13,
wobei der erste Winkel zwischen 30 und 60 Grad beträgt und der zweite Winkel zwischen -30 und -60 Grad beträgt.

15. Verfahren nach Anspruch 12, wobei die mindestens einigen zweiten Garne einen ersten Schleier zweiter Garne auf einer Außenfläche der ersten Schicht (202) zweiter Garne und einen zweiten Schleier zweiter Garne auf einer Außenfläche der zweiten Schicht (202) zweiter Garne umfassen.

16. Verfahren nach Anspruch 12, wobei mindestens einige erste Garne eine laminierte Struktur (200) sind, die mindestens drei Schichten aufweist, die mindestens eine Schrägschicht (204, 206) erster Garne beinhalten, wobei jede der mindestens einen Schrägschichten (204, 206) erster Garne Fasern in einem anderen Winkel als 0° oder 90° in Bezug auf Fasern in Schichten erster Garne, die keine Schrägschichten (204, 206) erster Garne sind, aufweist.

17. Verfahren nach Anspruch 16, wobei die laminierte Struktur (200) Folgendes umfasst:
eine erste Faserschicht (202) erster Garne in einer dritten Richtung;
eine zweite Faserschicht (202) erster Garne in einer vierten Richtung;
die mindestens eine Faserschrägschicht (204, 206) erster Garne ist zwischen der ersten und der zweiten Schicht (202) erster Garne angeordnet; und
Fasern in einer ersten Schrägschicht (204) erster Garne befinden sich in einem anderen ersten Winkel in Bezug auf die erste Richtung.

18. Verfahren zum Formen eines dreidimensionalen gewebten Verbundwerkstoffs, umfassend:
Formen einer dreidimensionalen gewebten Struktur nach Anspruch 12 oder 17; und
Imprägnieren der dreidimensionalen gewebten Struktur mit einem Matrixmaterial.

## Revendications

1. Structure tridimensionnelle (3D) tissée, comprenant :
une pluralité de premiers fils dans une direction particulière ;
une pluralité de seconds fils dans une autre direction entrelacés avec la pluralité de premiers fils,
**caractérisée en ce qu'**au moins certains seconds fils sont une structure stratifiée (200) présentant au moins trois couches (202, 204, 206) qui comportent
une première couche de seconds fils (202) de fibres présentant des fibres dans une première direction,
une seconde couche de seconds fils (202) de fibres présentant des fibres dans une première ou une deuxième direction, et
au moins une couche de polarisation de seconds fils (204, 206), chacune de l'au moins une couche de polarisation de seconds fils (204, 206) présentant des fibres à un angle autre que 0° ou 90° par rapport aux fibres dans des couches de seconds fils qui ne sont pas des couches de polarisation de seconds fils, et l'au moins une couche de polarisation de seconds fils (204, 206) étant disposée entre les première et seconde couches de seconds fils (202),
dans laquelle les fibres dans une première couche de polarisation de seconds fils (204) forment un premier angle par rapport à la première direction.

2. Structure tissée selon la revendication 1, comprenant :
une seconde couche de polarisation de seconds fils de fibres (206) disposée entre les première et seconde couches de seconds fils (202),
dans laquelle les fibres dans la seconde couche de polarisation de seconds fils (206) forment un second angle par rapport à la première direction.

3. Structure tissée selon la revendication 2, dans laquelle le premier angle est compris entre 30 et 60 degrés et le second angle est compris entre -30 et -60 degrés.

4. Structure tissée selon la revendication 3, dans laquelle le premier angle est de 45 degrés et le second angle est de - 45 degrés.

5. Structure tissée selon la revendication 3, dans laquelle le premier angle est de 30 degrés et le second angle est de - 60 degrés.

6. Structure tissée selon la revendication 1, dans laquelle les au moins certains seconds fils comprennent un premier voile de seconds fils sur une surface extérieure de la première couche de seconds fils (202) et un second voile de seconds fils sur une surface extérieure de la seconde couche de seconds fils (202).

7. Structure tissée selon la revendication 1, dans laquelle au moins certains premiers fils sont une structure stratifiée (200) présentant au moins trois couches qui comportent au moins une couche de polarisation de premiers fils (204, 206), chacune de l'au moins une couche de polarisation de premiers fils (204, 206) présentant des fibres à un angle autre que 0° ou 90° par rapport aux fibres dans les couches de premiers fils qui ne sont pas des couches de polarisation de premiers fils (204, 206).

8. Structure tissée selon la revendication 7, dans laquelle la structure stratifiée (200) comprend :
une première couche de premiers fils de fibres (202) dans une troisième direction ;
une seconde couche de premiers fils de fibres (202) dans une troisième ou quatrième direction ;
l'au moins une couche de polarisation de premiers fils de fibres (204, 206) disposée entre les première et seconde couches de premiers fils (202),
dans laquelle les fibres dans une première couche de polarisation de premiers fils (204) forment un autre premier angle par rapport à la première direction.

9. Structure tissée selon la revendication 8, dans laquelle la structure 3D tissée est formée en une préforme ayant une forme en coupe transversale choisie dans le groupe constitué de Pi, H, T, O et I.

10. Structure tissée selon la revendication 1, dans laquelle au moins certains des seconds fils sont des bandes multiaxiales.

11. Structure tissée selon la revendication 10, dans laquelle au moins certains des premiers fils sont des bandes multiaxiales.

12. Procédé de formation d'une structure tridimensionnelle (3D) tissée, comprenant :
le tissage d'une pluralité de premiers fils dans une direction particulière avec une pluralité de seconds fils dans une autre direction entrelacés avec la pluralité de premiers fils,
**caractérisé en ce qu'**au moins certains seconds fils sont une structure stratifiée (200) présentant au moins trois couches (202, 204, 206) qui comportent au moins une couche de polarisation de seconds fils (204, 206), une première couche de seconds fils de fibres (202) présentant des fibres dans une première direction, et une seconde couche de seconds fils de fibres (202) présentant des fibres dans une première ou seconde direction, chacune de l'au moins une couche de polarisation de seconds fils (204, 206) présentant des fibres à un angle autre que 0° ou 90° par rapport à des fibres dans des couches de second fil qui ne sont pas des couches de polarisation de seconds fils, et l'au moins une couche de polarisation de seconds fils (204, 206) étant disposée entre les première et seconde couches de seconds fils (202), dans lequel les fibres dans une première couche de polarisation de seconds fils (204) forment un premier angle par rapport à la première direction.

13. Procédé selon la revendication 12, comprenant :
la disposition d'une seconde couche de polarisation de seconds fils de fibres (206) entre les première et seconde couches de seconds fils (202),
dans lequel les fibres dans la seconde couche de polarisation de seconds fils (206) forment un second angle par rapport à la première direction.

14. Procédé selon la revendication 13,
dans lequel le premier angle est compris entre 30 et 60 degrés et le second angle est compris entre -30 et -60 degrés.

15. Procédé selon la revendication 12, dans lequel les au moins certains seconds fils comprennent un premier voile de seconds fils sur une surface extérieure de la première couche de seconds fils (202) et un second voile de seconds fils sur une surface extérieure de la seconde couche de seconds fils (202).

16. Procédé selon la revendication 12, dans lequel au moins certains premiers fils sont une structure stratifiée (200) présentant au moins trois couches qui comportent au moins une couche de polarisation de premiers fils (204, 206), chacune de l'au moins une couche de polarisation de premiers fils (204, 206) présentant des fibres à un angle autre que 0° ou 90° par rapport aux fibres dans les couches de premiers fils qui ne sont pas des couches de polarisation de premiers fils (204, 206).

17. Procédé selon la revendication 16, dans lequel la structure stratifiée (200) comprend :
une première couche de premiers fils de fibres (202) dans une troisième direction ;
une seconde couche de premiers fils de fibres (202) dans une quatrième direction ;
l'au moins une couche de polarisation de premiers fils de fibres (204, 206) est disposée entre les première et seconde couches de premiers fils (202) ; et
les fibres dans une première couche de polarisation de premiers fils (204) forment un autre premier angle par rapport à la première direction.

18. Procédé de formation d'un composite tridimensionnel tissé, comprenant :
la formation d'une structure tridimensionnelle tissée selon les revendications 12 ou 17 ; et
l'imprégnation de la structure tridimensionnelle tissée avec un matériau matriciel.
